# EUROPÄISCHE PATENTANMELDUNG

(11) **EP 3 088 816 A1**
(43) Veröffentlichungstag der Anmeldung: **02.11.2016**
(21) Anmeldenummer: 16161091.0
(22) Anmeldetag: 19.06.2009
(51) Int. Cl.: F24H 3/04, F24H 9/18, B60H 1/22, H01R 4/28, H05B 3/12

(54) **VERFAHREN ZUM HERSTELLEN EINER ELEKTRISCHEN HEIZVORRICHTUNG UND ELEKTRISCHE HEIZVORRICHTUNG**

(62) Teilanmeldung aus: 09008076.3
(71) Anmelder: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE)
(74) Vertreter: Grünecker Patent- und Rechtsanwälte PartG mbB

(57) **Zusammenfassung**

Die vorliegende Erfindung betrifft ein Verfahren zum Herstellen einer elektrischen Heizvorrichtung mit offenen Gehäuse, in dem wenigstens ein Blechbänder (16) mit einem dazwischen angeordneten PTC-Element (14) umfassendes PTC-Heizelement (12) und wenigstens ein daran wärmeleitend anliegendes Radiatorelement (10) gehalten ist und das zum elektrischen Anschluss des wenigstens einen PTC-Heizelementes (12) eine Kontaktzunge (26) trägt, die mit einem ausgewählten Blechband (16) verbunden ist. Der vorliegenden Erfindung liegt das Problem zugrunde, ein Verfahren zum Herstellen einer elektrischen Heizvorrichtung anzugeben, mit dem auf einfache und wirtschaftliche Weise eine Kontaktzunge (26) mit einem ausgewählten Blechband (16) verbunden werden kann. Zur Lösung des verfahrensmäßigen Problems wird mit der vorliegenden Erfindung ein Verfahren vorgeschlagen, bei dem das Gehäuse unter Einschluss von PTC-Heizelement (12) und Radiatorelement (10) geschlossen wird, sodass sich die Kontaktzunge (26) und das ausgewählte Blechband (16) überlappen und die Kontaktzunge (26) mit dem ausgewählten Blechband (16) durch plastische Verformung im Überlappungsbereich elektrisch miteinander verbunden werden. Mit der vorliegenden Erfindung wird ferner eine elektrische Heizvorrichtung mit einem offenen Gehäuse, in dem wenigstens ein Blechbänder (16) mit einem dazwischen angeordneten PTC-Element (14) umfassendes PTC-Heizelement (12) und wenigstens ein daran wärmeleitend anliegendes Radiatorelement (10) gehalten ist, vorgeschlagen, bei der das Gehäuse zum elektrischen Anschluss des wenigstens einen PTC-Heizelementes (12) eine Kontaktzunge (26) trägt, die mit einem ausgewählten Blechband (16) über eine Quetschverbindung verbunden ist, die in einer Gehäuseöffnung (68) für ein Umformwerkzeug freiliegt, mit dem ausgewählte Blechbänder (16) im Bereich ihrer Enden durch Umformen mit zugeordneten Kontaktzungen (26) verbindbar sind.

## Beschreibung

Die vorliegende Erfindung betrifft eine elektrische Heizvorrichtung, ein Verfahren zur Herstellung derselben, sowie ein Gehäuse für eine elektrische Heizvorrichtung. Die vorliegende Erfindung betrifft insbesondere ein Gehäuse mit einem Gehäuseunterteil und einem Gehäuseoberteil. Das Gehäuse ist offen, d.h. hat wenigstens zwei sich regelmäßig gegenüberliegende Öffnungen, durch die zu erwärmende Luft hindurchströmt. In dem Gehäuse ist wenigstens ein PTC-Heizelement, welches üblicherweise zwei sich parallel erstreckende Blechbänder und dazwischen angeordnete PTC-Elemente umfasst, sowie wenigstens ein wärmeleitend daran anliegendes Radiatorelement gehalten. Des weiteren sind Kontaktzungen von dem Gehäuse getragen, die zum elektrischen Anschluss der PTC-Heizelemente vorgesehen und mit ausgewählten Blechbändern verbunden sind. Die Kontaktzungen ragen üblicherweise von der Außenseite des als Rahmen ausgebildeten Gehäuses ab und befinden sich innerhalb eines Steckergehäuses, das seitlich von dem Gehäuse abragt.

Eine derartige elektrische Heizvorrichtung ist beispielsweise aus der EP 1 564 503 B1 bekannt.

Bei diesem Stand der Technik werden die Kontaktzungen durch die Blechbänder selbst gebildet. Die Kontaktzungen sind in an dem Gehäuse ausgebildeten Schlitzen gehalten, die in einer Trennwand ausgespart sind, welche eine Aufnahme für das wenigstens eine PTC-Heizelement und das daran anliegende Radiatorelement bildet.

Im Stand der Technik sind elektrische Heizvorrichtungen beschrieben, die auch die vorliegende Erfindung als bevorzugt ansieht, und bei der die einzelnen Lagen innerhalb des Gehäuses, welche die Wärme erzeugen und an die zu erwärmende Luft abgeben, unter Federvorspannung in dem Gehäuse gehalten sind. Diese Lagen werden durch das PTC-Heizelement und das daran anliegende Radiatorelement gebildet. Üblicherweise sind mehrere solcher sich parallel erstreckenden Lagen nach Art eines Schichtaufbaus in dem Gehäuse unter der Vorspannung wenigstens einer außenseitigen Feder gehalten.

Im Hinblick auf einen zuverlässigen elektrischen Anschluss der elektrischen Heizvorrichtung über die Kontaktzungen ist es mitunter zu bevorzugen, diese als separate Stanzteile auszubilden und mit ausgewählten Blechbändern elektrisch zu verbinden (vgl. EP 2 019 268 A2). So werden insbesondere in der Automobilindustrie, in der elektrische Heizvorrichtungen der gattungsgemäßen Art weite Verbreitung gefunden haben, zuverlässige elektrische Steckverbindungen gefordert, da bei ungenauer Kontaktierung und den geforderten Heizleistungen elektrischer Heizvorrichtungen von bis zu etwa 2000 W bei der gegebenen Bordnetzspannung von 12 V Übergangswiderstände an den Kontaktzungen zu thermischen Problemen führen können. So werden die Kontaktzungen mitunter aus Blechstücken gebildet, die durch Stanzbearbeitung in besonderer Weise der Geometrie eines Gegensteckers entsprechen und/oder mit einer Beschichtung versehen sind, durch die bestmöglich elektrischer Strom zwischen der Kontaktzunge und einem Gegenstecker übertragen werden kann. Das Blechband hingegen ist üblicherweise ein lediglich auf Länge geschnittenes Halbzeug, so dass ein Bedarf besteht, die Kontaktzunge mit dem Blechband zuverlässig zu verbinden.

Der vorliegenden Erfindung liegt das Problem zugrunde, ein Verfahren zum Herstellen einer elektrischen Heizvorrichtung anzugeben, mit dem auf einfache und wirtschaftliche Weise eine Kontaktzunge mit einem ausgewählten Blechband verbunden werden kann. Der vorliegenden Erfindung liegt ferner die Aufgabe zugrunde, eine leicht herzustellende elektrische Heizvorrichtung anzugeben, bei der die zunächst separat erstellte Kontaktzunge mit einem Blechband auf einfache Weise und zuverlässig verbunden ist. Die vorliegende Erfindung will ferner ein Gehäuse für eine solche elektrische Heizvorrichtung angeben, welches sich bestmöglich für die Durchführung des erfindungsgemäßen Verfahrens und die Herstellung der erfindungsgemäßen elektrischen Heizvorrichtung eignet.

Zur Lösung des verfahrensmäßigen Problems wird mit der vorliegenden Erfindung ein Verfahren mit den Merkmalen von Anspruch 1 vorgeschlagen. Dieses unterscheidet sich dadurch von dem gattungsbildenden Stand der Technik, dass die Kontaktzunge mit einem ausgewählten Blechband beim oder nach dem Schließen des Gehäuses verbunden werden. Bei der ersten Alternative können beispielsweise das wenigstens eine PTC-Heizelement und das wärmeleitend daran anliegende Radiatorelement in einen Teil des Gehäuses, beispielsweise das Gehäuseunterteil eingesetzt werden. Ebenso kann eine eventuell den Schichtaufbau unter Vorspannung haltende Feder in das Gehäuse eingesetzt werden. Dies erfolgt vorzugsweise gemäß dem aus der EP 1 564 503 B1 bekannten Vorgehen, bei dem zunächst der Schichtaufbau und das Federelement spannungsfrei in das Gehäuseunterteil eingesetzt werden. Das Schließen des Gehäuses erfolgt dabei vorzugsweise durch Einbringen eines Verdrängers in das Gehäuse, durch welchen der Aufnahmeraum innerhalb des Gehäuses derart verkleinert wird, dass die Feder und damit der in dem Gehäuse aufgenommene Schichtaufbau unter Federvorspannung gesetzt wird. Daher ist für das Schließen des Gehäuses eine nicht unerhebliche Kraft erforderlich, da hierbei nicht nur das Gehäuse geschlossen, sondern auch die Feder unter Vorspannung gesetzt wird.

Hier setzt die Erfindung an. Sie geht insbesondere davon aus, dass das Schließen des Gehäuses mit einem Presswerkzeug erfolgt, welches Anlageflächen zur flächigen Anlage an die Außenseite von Gehäuseunterteil und Gehäuseoberteil hat. Von diesen Anlageflächen können konturierte Pressbacken abragen, die beim werkzeugunterstützten Schließen des Gehäuses im Überlappungsbereich zwischen der Kontaktzunge und dem Blechband eine plastische Verformung bewirken, durch welche beide Elemente elektrisch miteinander verbunden werden.

Danach ist es möglich, mit einer werkzeugunterstützten Fügebewegung sowohl das Gehäuse zu schließen, als auch vorzugsweise sämtliche elektrische Verbindungen zwischen ausgewählten Blechbändern und den Kontaktzungen zu erzeugen.

Bei einer alternativen erfindungsgemäßen Verfahrensführung wird zunächst das Gehäuse unter Einschluss von PTC-Heizelement und Radiatorelement gegebenenfalls einem oder mehreren Federelementen sowie den Kontaktzungen geschlossen. Letztere haben einen Überlappungsbereich mit den Blechbändern. Dieser Überlappungsbereich befindet sich im Bereich der Enden ausgewählter Blechbänder, die dort üblicherweise über die Länge des PTC-Heizelementes und/oder des Radiatorelementes seitlich hinaus verlängert sind. Soweit nachstehend auf mehrere Quetschverbindungen zur Kontaktierung mehrerer Blechbänder mit zugeordneten Kontaktzungen abgestellt wird, soll hiermit nicht zum Ausdruck gebracht werden, dass die Erfindung nicht auch mit lediglich einem Blechband und einer Kontaktzunge verwirklicht werden kann. Gleichwohl ergeben sich besondere Vorteile bei der Wirtschaftlichkeit, wenn das Fügen durch Herstellen einer Quetschverbindung sämtliche elektrische Verbindungen zwischen vorgesehenen Kontaktzungen und Blechbändern erfasst.

Bei der zweiten Alternative des erfindungsgemäßen Verfahrens hat das Gehäuse vorzugsweise Aufnahmen zur vorbestimmten Halterung der Kontaktzungen an dem Gehäuse. Beim Bestücken des Gehäuses werden die Blechbänder vorzugsweise in Quetschlaschen eingeschoben, die vorzugsweise an der Kontaktzunge ausgebildet sind, da diese als komplizierteres Stanzteil ausgebildet werden kann, wohingegen es im Hinblick auf eine wirtschaftliche Fertigung zu bevorzugen ist, das Blechband lediglich durch Zuschneiden gegebenenfalls Biegen eines blechförmigen Halbzeuges vorzubereiten. Durch Einbringen des freien Endes des Blechbandes in die Quetschlasche wird zwischen beiden Elementen der Überlappungsbereich geschaffen. Die derart vorbereiteten Bauteile werden in das Gehäuse eingesetzt. Das Gehäuse wird geschlossen. Nach dem Schließen des Gehäuses werden die Kontaktzungen mit den Blechbändern elektrisch mit der zu fordernden Sicherheit für die Stromübertragung verbunden, d.h. durch plastisches Verformen wird eine Quetschverbindung der zuvor in dem Gehäuse positionierten Blechbänder mit den Kontaktzungen bewirkt.

Bei der erfindungsgemäßen Verfahrensführung sind üblicherweise keine besonderen Einrichtungen notwendig, das Blechband und die Kontaktzunge zum Herstellen einer Verbindung zu halten. Vielmehr erfolgt die Positionierung der Blechbänder und der Kontaktzungen durch Einsetzen in das Gehäuseteil. Beim Schließen oder nach dem Schließen des Werkzeuges wird dann die zuverlässige elektrische Verbindung zwischen der Kontaktzunge und dem zugeordneten Blechband hergestellt.

Gemäß einer bevorzugten Weiterbildung der vorliegenden Erfindung wird die Kontaktzunge mit dem ausgewählten Blechband durch plastisches Verformen einer Quetschverbindung verbunden, die durch Pressbacken erfolgt. Die Pressbacken sind vorzugsweise motorgetrieben und derart ausgebildet, dass sämtliche Kontaktzungen der elektrischen Heizvorrichtung mit den zugeordneten Blechbändern in Folge der Zustellbewegung der Pressbacken plastisch verformt und damit sicher elektrisch verbunden werden. Diese Pressbacken haben gemäß einer bevorzugten Weiterbildung der vorliegenden Erfindung Anlageflächen zum Fügen des Gehäuses und sind damit Bestandteil eines Fügewerkzeuges, welches sowohl geeignet ist, das Gehäuse zu schließen als auch die elektrische Verbindung zwischen den Kontaktzungen und den Blechbändern herzustellen. An diesem Fügewerkzeug können die Anlageflächen relativbeweglich zu den Pressbacken ausgebildet sein, um nach dem Schließen des Gehäuses die Vorschubbewegung der Anlageflächen zum Stillstand zu bringen, während gleichzeitig die Pressbacken zur plastischen Verformung der Quetschverbindung weiter aufeinander zu bewegt werden.

Zur Lösung des vorrichtungsmäßigen Problems wird mit der vorliegenden Erfindung eine elektrische Heizvorrichtung der eingangs genannten Art vorgeschlagen, bei der die Kontaktzunge über eine Quetschverbindung mit dem ausgewählten Blechband verbunden ist und die Quetschverbindung beim oder nach dem Schließen des Gehäuses gebildet ist.

Im Hinblick auf eine gute elektrische Kontaktierung zwischen der Kontaktzunge und dem Blechband wird gemäß einer bevorzugten Weiterbildung der elektrischen Heizvorrichtung vorgeschlagen, die Kontaktzunge mit wenigstens einer einteilig daran ausgebildeten Quetschlasche auszubilden, die nach Herstellen der Quetschverbindung das Blechband umgreift. Vorzugsweise sind zwei Quetschlaschen vorgesehen, die vorzugsweise endseitig an der Kontaktzunge nach anfänglicher Stanzbearbeitung abragen und durch Umbiegen aufeinander zu eine Aufnahme ausbilden, in welche das ausgewählte Kontaktblech mit seinem freien Ende eingeschoben werden kann. Nach solcher Vorbereitung muss lediglich die Quetschlasche zur Erzeugung einer sicheren elektrischen Verbindung verformt werden, was in einer einachsigen Bewegung durch ein Werkzeug erfolgen kann, welches rechtwinklig zu der Erstreckungsrichtung von Blechband und Kontaktzunge gegen diese zur Einwirkung gebracht wird.

Zur Verbesserung der elektrischen Kontaktierung weist die Quetschlasche wenigstens eine Verformungskerbe auf, durch welche die Quetschlasche bis in das darunterliegende Blechband plastisch verformt ist. Dabei durchsetzt die plastische Verformung die gesamte Quetschlasche und zeigt sich an der Phasengrenze zwischen der Quetschlasche und dem Blechband als von der Oberfläche der Quetschlasche abragende Verformung. Die Verformungskerbe kann mit derartiger Intensität eingeformt werden, dass sich eine plastische Verformung auch im Überlappungsbereich an dem Blechband ergibt. Jedenfalls führt die Verformungskerbe zu einer punktuellen bzw. linienförmigen Übertragungsfläche zwischen der Kontaktzunge und dem Blechband für elektrischen Strom, die eine zuverlässige elektrische Kontaktierung zwischen der Kontaktzunge und dem Blechband gewährleistet.

Die Verformungskerbe befindet sich vorzugsweise im Kantenbereich des Blechbandes. Besonders bevorzugt wird das Blechband von zwei Quetschlaschen umfasst, die in etwa auf mittlerer Höhe des Blechbandes enden und die im Umbiegungs- bzw. Krümmungsbereich, wo die Quetschlaschen sich über das Blechband legen, durch Verformungskerben zuverlässig mit diesen kontaktiert sind. Aus gleichen Gründen ist gemäß einer bevorzugten Weiterbildung zwischen dem Blechband und der Quetschlasche wenigstens ein durch Stanzbearbeitung ausgebildeter Kontaktvorsprung vorgesehen. Dieser Kontaktvorsprung wird üblicherweise an der durch Stanzbearbeitung vorbereiteten Kontaktzunge ausgebildet. Die Kontaktvorsprünge liegen üblicherweise den Quetschlaschen gegenüber und ragen nach innen hin in Richtung auf die Quetschlaschen ab, um eine möglichst genaue punktuelle elektrische Kontaktierung zwischen der Kontaktzunge und dem Blechband zu bewirken.

Gemäß einer weiteren bevorzugten Ausgestaltung der vorliegenden Erfindung sind Quetschlaschen beispielsweise an den den Kontaktzungen gegenüberliegenden Enden der Blechbänder vorgesehen, die elektrisch mit einer unterschiedliche Blechbänder kurzschließende Kontaktbrücke verbunden sind. Dadurch wird die Möglichkeit geschaffen, verschiedene PTC-Heizelemente zu einem Heizkreis auf einfache Weise miteinander elektrisch zu verbinden. Dabei wird davon ausgegangen, dass der elektrische Kontakt zu einem Gegenstecker an einem stirnseitigen Ende des Gehäuses ermöglicht wird, vorzugsweise durch in einem Steckergehäuse zusammengefasste Kontaktzungen, wohingegen die elektrische Verbindung zwischen einzelnen PTC-Heizelementen innerhalb des Gehäuses über besagte Kontaktbrücke erfolgt. Diese Ausgestaltung eignet sich insbesondere für elektrische Heizvorrichtungen, bei denen ein PTC-Heizelement mit daran anliegenden Radiatorelementen in einem Gefach eines Gehäuses aufgenommen und durch das Kunststoffmaterial des Gehäuses von einem anderen PTC-Heizelement elektrische isoliert gehalten ist, so dass eine Stromübertragung zwischen benachbarten PTC-Heizelementen in Querrichtung, d.h. unter Einschluss der Radiatorelemente nicht möglich ist. Auch ist es denkbar, die Kontaktbrücke mit einer Kontaktzunge auszubilden und an der Anschlussseite, d.h. an derjenigen Seite vorzusehen, an der sich die Kontaktzungen befinden, um mehrere PTC-Heizelemente anschlussseitig über eine einzige Kontaktzunge zu verbinden. Diese Weiterbildung hat Vorteile, insbesondere beim elektrischen Anschluss der elektrischen Heizvorrichtung durch Einstecken der Kontaktzungen in eine Platine, die auf dem Gehäuse der elektrischen Heizvorrichtung aufsitzt. Durch die Kontaktbrücke, die vorzugsweise zwei oder mehr Blechbänder miteinander kurzschließt und elektrisch über eine einzige Kontaktzunge nach außen zum elektrischen Anschluss verlängert ist, kann die Anzahl der Kontaktstellen an der Platine verringert werden. Dabei ist zu beachten, dass heutzutage regelmäßig bei Kontaktzungen zum Anschluss an eine Platine das die Platine umgebende Gehäuse im Bereich der Durchtrittsöffnungen der Kontaktzungen abgedichtet werden muss. Des weiteren müssen an der Platine Kontaktfedern zur elektrischen Verbindung der Kontaktzungen ausgebildet sein. Durch die Verringerung der Anzahl der an der Platine anzuschließenden Kontaktzungen können die Kosten für die Herstellung der elektrischen Heizvorrichtung vermindert werden.

Das mit der vorliegenden Erfindung vorgeschlagene Gehäuse für eine elektrische Heizvorrichtung bildet in an sich bekannter Weise eine Aufnahme für das wenigstens eine PTC-Heizelement und das wenigstens eine daran anliegende Radiatorelement aus und hat ein Gehäuseunterteil und ein Gehäuseoberteil (vgl. EP 1 564 503 B1). Es kann des weiteren eine Aufnahme für wenigstens ein Federelement umfassen, durch welches das Radiatorelement unter Vorspannung gegen das PTC-Heizelement angelegt wird. Das Gehäuse ist offen, d.h. mit wenigstens zwei sich gegenüberliegenden Öffnungen zum Durchtritt von zu erwärmender Luft vorgesehen. Diese Luftdurchtrittsöffnung kann beispielsweise mit Quer- und Längsstreben durchsetzt sein. Die Längsstreben können sich dabei insbesondere parallel zu den PTC-Heizelementen erstrecken und diese abdecken und/oder abkapseln, so dass lediglich die Radiatorelemente zwischen den Luftdurchtrittsöffnungen freiliegen. Das Gehäuse hat ferner eine Einbringöffnung für ein Umformwerkzeug, durch welches ausgewählte Blechbänder im Bereich ihrer Enden durch Umformen mit zugeordneten Kontaktzungen verbindbar sind. Die Einbringöffnung erstreckt sich vorzugsweise quer zu der Längserstreckung der Blechbänder und/oder der Radiatorelemente und lässt mehrere Blechbänder im Bereich ihrer Enden frei. Die Einbringöffnung lässt zumindest den Überlappungsbereich zwischen Kontaktzunge und Blechband frei und ist hinsichtlich ihrer Abmessung auf die Abmessung des Umformwerkzeugs derart abgestimmt, dass dieses zur Umformung sämtlicher Kontaktzungen in das Gehäuse einbringbar ist. Die Einbringöffnung kann für sich durch Stege getrennt sein, welche das Gehäuse im Bereich der Einbringöffnung versteifen und/oder den Luftwiderstand im Bereich der Einbringöffnung erhöhen, um eine Bypassströmung durch die Einbringöffnung zu vermeiden, die zu einer ungenügenden Erwärmung des Luftstromes führen kann, wenn dieser statt an den Radiatorelementen vorbeizustreichen, ganz oder überwiegende durch die Einbringöffnung strömt. Ebenso kann eine Abdeckung Teil des Gehäuses sein, welche nach der Umformbearbeitung auf die Einbringöffnung aufgelegt wird, um diese ganz oder teilweise zu verschließen.

Gemäß einer bevorzugten Weiterbildung der vorliegenden Erfindung bilden das Gehäuseunterteil und das Gehäuseoberteil jeweils Abdeckungen des Gehäuses aus. Diese Abdeckungen erstrecken sich bei geschlossenem Gehäuse parallel zueinander und sparen die Luftdurchtrittsöffnung sowie die Einbringöffnung aus. Die Einbringöffnung und die Luftdurchtrittsöffnung in der Abdeckung des Gehäuseunterteils bzw. des Gehäuseoberteils sind demnach parallel zueinander vorgesehen. Üblicherweise erstrecken sich beide Öffnungen in der gleichen Ebene, die durch die Abdeckung vorgegeben ist. Die Einbringöffnung ist vorzugsweise nach Art eines Längsschlitzes mit einer Erstreckung vorgesehen, die parallel zu einem durch das Gehäuseunterteil und das Gehäuseoberteil gebildeten Querholm verläuft. Von diesem Querholm ragt ein Steckerflansch ab, der die sich üblicherweise rechtwinklig zu dem Querholm erstreckenden Kontaktzungen umgibt, um Führungs- und Halteflächen für das Gehäuse eines Gegensteckers auszubilden.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine Draufsicht auf ein mit PTC-Heizlementen und Radiatorelementen bestücktes Gehäuseunterteil;
- Figur 2: ein Blechband mit zugehöriger Kontaktzunge vor dem Fügen;
- Figur 3: das Blechband und die Kontaktzunge gemäß Figur 2 nach dem Fügen;
- Figur 4: eine Kontaktbrücke zu dem in Figur 1 gezeigten Ausführungsbeispiel;
- Figur 5: einen Endbereich eines weiteren Ausführungsbeispiels einer elektrischen Heizvorrichtung und
- Figur 6: eine Schnittansicht entlang der Linie VI-VI gemäß Figur 5 mit einem Presswerkzeug.

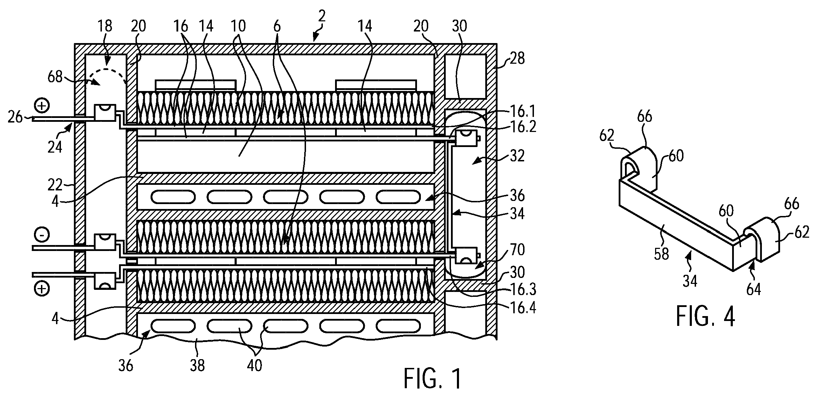

Figur 1 zeigt eine Draufsicht auf ein mit Bezugszeichen 2 gekennzeichnetes Gehäuseunterteil, welches mehrere, durch an dem Gehäuseunterteil 2 ausgebildete Trennwände 4 voneinander getrennte Gefache 6 zur Aufnahme von Heizstäben 8 ausbildet. Jeder Heizstab 8 umfasst zwei Radiatorelemente 10, die zwischen sich ein PTC-Heizelement 12 einschließen. Das PTC-Heizelement 12 umfasst in Längsrichtung in einer Ebene nebeneinander angeordnete PTC-Elemente 14, die zwischen Blechbändern 16 angeordnet sind.

Ausgewählte Blechbänder 16 sind seitlich, d.h. über die Länge der Radiatorelemente 10 hinaus verlängert und überragen das Gefach 6. Auf der linken Seite des Gehäuseunterteils 2, welche die Anschlussseite ausbildet, befindet sich ein Einbringgefach 18, welches durch eine Zwischenwand 20 von den Gefachen 6 und einen Querholm 22 nach außen hin begrenzt ist. Der Querholm 22 ist mit Aufnahmeschlitzen 24 versehen, die jeweils von einer Kontaktzunge 26 durchragt sind.

Auf der gegenüberliegenden Querseite ist zwischen dem weiteren äußeren Querholm 28 und einer weiteren Zwischenwand sowie zwischen Trennwänden 30 ein weiteres Gefach 32 ausgebildet, in welches zwei ausgewählte Blechbänder 16.2 und 16.3 hineinragen. Diese Blechbänder 16.2 und 16.3 sind über eine Kontaktbrücke 34 elektrisch miteinander verbunden.

Bei dem gezeigten Ausführungsbeispiel sind die Heizstäbe 8 elektrisch isoliert voneinander in den Gefachen 6 gehalten. Zwischen den einzelnen Gefachen 6 für die Heizstäbe 8 befinden sich Freiräume 36, die durch eine Abdeckung 38 des Gehäuseunterteils 2 außenseitig verblendet sind. Die Abdeckung 38 bildet im Bereich der Gefache 6 den Boden des Gehäuseunterteils 2 aus. Im Bereich der Freiräume 36 kann die Abdeckung 38 nach innen versetzt sein. Die Abdeckung 38 weist im Bereich der Freiräume 36 Luftdurchtrittsöffnungen 40 auf.

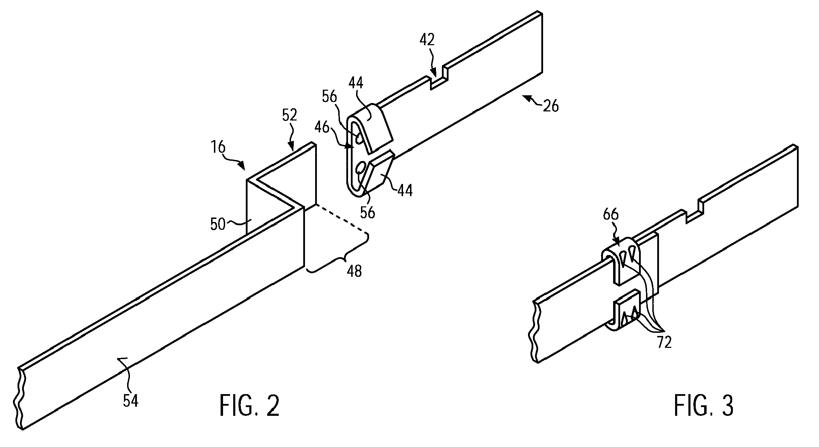

Die Figuren 2 bis 4 zeigen Elemente für die Bestromung des elektrischen Zuheizers gemäß Figur 1. Für den elektrischen Anschluss von der Außenseite sind die Kontaktzungen 26 aus einem elektrisch gut leitenden Material ausgebildet und mit einer Silberbeschichtung versehen. Die Kontaktzungen 26 weisen einen Halteschlitz 42, der einen im Bereich des Aufnahmeschlitzes 24 verbleibenden Steg des Querholmes 22 übergreift, um die Kontaktzunge 26 in Längsrichtung an dem Gehäuseunterteil 2 zu sichern. Das innere Ende der Kontaktzunge 26 ist durch Stanzbearbeitung mit Quetschlaschen 44 versehen, die zunächst durch Stanz-Biege-Bearbeitung aufeinander zu gebogen sind, um eine Aufnahme 46 für das der Kontaktzunge 26 zugeordnete Blechband 16 auszubilden. Ein Endbereich 48 des Blechbandes 16 weist einen Biegeversatz 50 auf, durch welchen das freie Ende 52 des Blechbandes 16 gegenüber der eine Anlagefläche 54 für die PTC-Elemente bildenden Ebene versetzt ausgerichtet ist.

Auf der den Quetschlaschen 44 gegenüberliegenden Innenseite sind an der Kontaktzunge 26 Kontaktvorsprünge 56 durch Stanzbearbeitung ausgebildet, die von der ansonsten ebenen Seitenfläche der Kontaktzunge 26 in Richtung auf die Quetschlaschen 44 abragen.

Zum Verbinden von Blechband 16 und Kontaktzunge 26 wird zunächst das freie Ende 52 der Kontaktzunge 26 in die Aufnahme 46 eingebracht, bis das freie Ende 52 die Quetschlaschen 44 überragt (vgl. Figur 3). In diesem Zustand sind zunächst das Blechband 16 und die Kontaktzunge 26 in das Gehäuseunterteil 2 eingebracht.

Figur 4 verdeutlicht die Einzelheiten der in Figur 1 gezeigten Kontaktbrücke 34, die einen mittleren Verbindungsschenkel 58 und in etwa rechtwinklig dazu abragende Kontaktschenkel 60 aufweist, die jeweils mit einer Quetschlasche 62 versehen sind. Die Quetschlaschen 62 bilden zwischen sich und dem zugeordneten Kontaktschenkel 60 eine U-förmige Aufnahme 64 aus. Die Kontaktbrücke 34 wird nach Einbringen der Blechbänder 16.2 und 16.3 auf diese aufgelegt, so dass die in das Gefach 32 hineinragenden freien Enden dieser Blechbänder 16.2 und 16.3 in der U-förmigen Aufnahme 64 aufgenommen sind und ein Krümmungsbereich 66 der Quetschlaschen 62 auf der schmalen Stirnseite der Blechbänder 16 aufliegt.

Das derart vorbereitete Gehäuseunterteil wird im Zuge der Herstellung der elektrischen Heizvorrichtung mit einem Gehäuseoberteil abgedeckt, welches jedenfalls eine, die Radiatorelemente 10 freilassende Öffnung aufweist. Das Gehäuseoberteil kann beispielsweise als Gehäusedeckel ausgebildet sein, der lediglich die PTC-Heizelemente 12 und einen Teil der Zwischenräumen zwischen den Trennwänden 20 und den Querholmen 22 bzw. 28 abdeckt. Dabei lässt das Gehäuseunterteil und das Gehäuseoberteil jeweils eine Einbringöffnung frei, deren stirnseitige Begrenzung in Figur 1 mit strichpunktierten Linien angedeutet und mit Bezugszeichen 68 für die Anschlussseite und 70 für die gegenüberliegende Querseite gekennzeichnet.

Dadurch liegen die Verbindungsstellen zwischen der Kontaktbrücke 34 und den zugeordneten Blechbändern 16.2 und 16.3 einerseits sowie den ausgewählten Blechbändern 16.1, 16.3 und 16.4 und den zugeordneten Kontaktzungen 26 an den gegenüberliegenden Seitenflächen des Gehäuses frei.

Nach bzw. während des Schließens des Gehäuses kann an diesen Stellen eine Umformbearbeitung stattfinden, durch welche die Kontaktzungen 26 bzw. 62 in vorbestimmter Weise elektrisch mit den Blechbändern 16 kontaktiert werden. Am Ende dieser Umformbearbeitung liegen die Quetschlaschen 44 der Kontaktzungen 26 in etwa parallel zu deren Seitenfläche, die auch die Anlagefläche 54 des Blechbandes 16 bildet. Durch die Umformbearbeitung sind am Kantenbereich des Blechbandes 16 Verformungskerben 72 gebildet, die die Quetschlaschen 54 im Krümmungsbereich 66 durchsetzen und punktuell Kontaktierungsstellen zwischen der Kontaktzunge 26 und dem Blechband 16 ausbilden. Diese Kontaktstellen bewirken üblicherweise auch eine plastische Verformung des Materials der Blechbänder 16. Durch die plastische Verformung der Quetschlaschen 66 sind im Übrigen die Kontaktvorsprünge 56 mit Druck gegen das Blechband 16 angelegt. Die Quetschbearbeitung führt zu einer innigen Verbindung zwischen beiden Teilen 16, 26 und einer zuverlässigen Kontaktierung an der Phasengrenze.

Entsprechendes ergibt sich für die Umformbearbeitung der Quetschlaschen 62 der Kontaktbrücke 34. Die Verformungen sowohl der Kontaktbrücke 34 als auch der Kontaktzungen 26 erfolgt vorzugsweise simultan durch gleichzeitiges Einbringen von Pressbacken, die beidseitig auf einander zu in die Einbringöffnungen 68 bzw. 70 eingebracht werden.

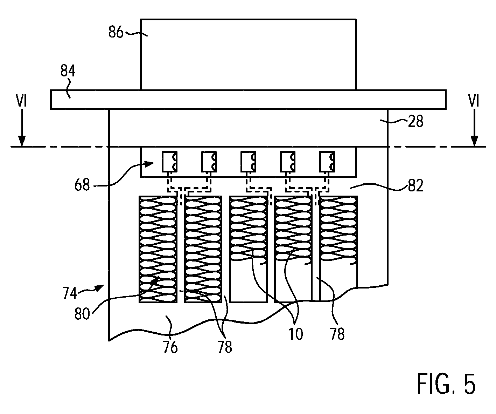

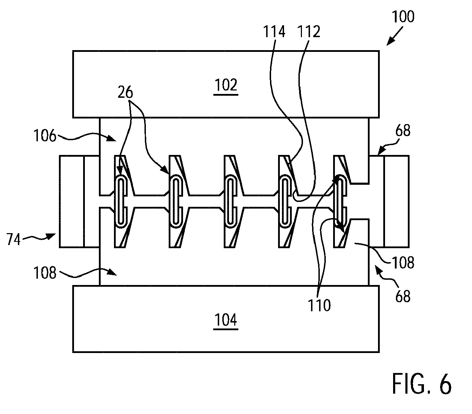

Die Figuren 5 und 6 verdeutlichen ein zweites Ausführungsbeispiel, wobei Figuren 5 das anschlussseitige Ende eines mit Bezugszeichen 74 gekennzeichneten Gehäuses verdeutlicht, welches eine durch Querstreben 76 und Längsstreben 78 durchsetzte Durchtrittsöffnungen 80 für zu erwärmende Luft ausbildet. In dieser Durchtrittsöffnung 80 liegen lediglich die Radiatorelemente 10 frei. Die zugeordneten PTC-Heizelemente liegen hinter den einzelnen Längsstreben 78 und sind von diesen abgedeckt.

Die Blechbänder ausgewählter PTC-Heizelemente sind seitlich über die Radiatorelemente 10 hinaus verlängert und jeweils mit einem Biegeversatz versehen, so dass deren freien Enden mit etwa gleichmäßigem Abstand in Querrichtung relativ zueinander zwischen den einander gegenüberliegenden Einbringöffnungen 68 des Gehäuses 74 freiliegen. Der Biegeversatz ist vorliegend durch strichpunktierte Linien angedeutet und befindet sich hinter einem Blendsteg 82, der durch das Gehäuseunterteil bzw. Gehäuseoberteil ausgebildet ist und sich quer zu dem Querholm 28 erstreckt. Der Querholm 28 wird durch einen Befestigungsflansch 84 überragt, von dem ein Steckergehäuse 86 abragt, welches sämtliche Kontaktzungen 26 der Heizvorrichtung umgibt und Führungs- bzw. Befestigungsflächen für ein Gegengehäuse eines Gegensteckers ausbildet.

Die in Figur 6 gezeigte Schnittansicht verdeutlicht die Verformungsbearbeitung nach dem Schließen des Gehäuses zum Herstellen einer sicheren elektrischen Verbindung zwischen den Kontaktzungen 26 und den zugeordneten Blechbändern 16. Das in Figur 6 mit Bezugszeichen 100 gekennzeichnete Presswerkzeug hat ein Oberteil 102 und ein Unterteil 104, von dem jeweils einander zugeordnete Pressbacken 106, 108 abragen, die keilförmig zulaufende, sich in Längsrichtung der Blechbänder 16 erstreckende Pressaufnahmen 110 ausbilden, von deren Schrägflächen 112 zwei in Längsrichtung der Blechbänder 16 mit Abstand zueinander vorgesehene Quetschkeile 114 abragen.

Beim Einbringen der Pressbacken 106, 108 in die Einbringöffnungen 68 werden zunächst durch die keilförmige Ausgestaltung der Pressaufnahmen 110 die Blechbänder 16 und die zugeordneten Kontaktzungen 26 ober- und unterseitig umgriffen. Bei fortschreitender Bewegung von Ober- und Unterteil 102, 104 aufeinander zu wirken schließlich die Quetschkeile 114 gegen die Krümmungsbereiche 66, so dass diese schließlich die Verformungskerben 72 ausbilden.

Mit dieser Umformbearbeitung werden sämtliche Kontaktzungen 26 zeitgleich und in einem mit den zugeordneten Blechbändern 16 verbunden. Das Gehäuse 74 dient dabei der Positionierung der zu fügenden Teile.

### Bezugszeichenliste

- 2: Gehäuseunterteil
- 4: Trennwand
- 6: Gefache
- 8: Heizstab
- 10: Radiatorelement
- 12: PTC-Heizelement
- 14: PTC-Element
- 16: Blechband
- 18: Einbringgefach
- 20: Zwischenwand
- 22: Querholm
- 24: Aufnahmeschlitz
- 26: Kontaktzunge
- 28: Querholm
- 30: Trennwand
- 32: Gefach
- 34: Kontaktbrücke
- 36: Freiraum
- 38: Abdeckung
- 40: Luftdurchtrittsöffnung
- 42: Halteschlitz
- 44: Quetschlasche
- 46: Aufnahme
- 48: Endbereich
- 50: Biegeversatz
- 52: freies Ende
- 54: Anlagefläche
- 56: Kontaktvorsprung
- 58: Verbindungsschenkel
- 60: Kontaktschenkel
- 62: Quetschlasche
- 64: U-förmige Aufnahme
- 66: Krümmungsbereich
- 68: Einbringöffnung
- 70: Einbringöffnung
- 72: Verformungskerbe
- 74: Gehäuse
- 76: Querstrebe
- 78: Längsstrebe
- 80: Durchtrittsöffnung
- 82: Blendsteg
- 84: Befestigungsflansch
- 86: Steckergehäuse
- 100: Presswerkzeug
- 102: Oberteil
- 104: Unterteil
- 106: Pressbacke
- 108: Pressbacke
- 110: Pressaufnahme
- 112: Schrägfläche
- 114: Quetschkeil

## Patentansprüche

1. Verfahren zum Herstellen einer elektrischen Heizvorrichtung mit einem offenen Gehäuse, in dem wenigstens ein Blechbänder (16) mit einem dazwischen angeordneten PTC-Element (14) umfassendes PTC-Heizelement (12) und wenigstens ein daran wärmeleitend anliegendes Radiatorelement (10) gehalten ist und das zum elektrischen Anschluss des wenigstens einen PTC-Heizelementes (12) eine Kontaktzunge (26) trägt, die mit einem ausgewählten Blechband (16) verbunden ist,
**dadurch gekennzeichnet,**
**dass** das Gehäuse unter Einschluss von PTC-Heizelement (12) und Radiatorelement (10) geschlossen wird, sodass dass sich die Kontaktzunge (26) und das ausgewählte Blechband (16) überlappen und dass die Kontaktzunge (26) mit dem ausgewählten Blechband (16) durch plastische Verformung im Überlappungsbereich elektrisch miteinander verbunden werden.

2. Verfahren nach Anspruch 1, **dadurch gekennzeichnet, dass** die Kontaktzunge (26) mit dem ausgewählten Blechband (16) durch Pressbacken (106, 108) verbunden wird, die zwischen der Kontaktzunge (26) und dem Blechband (16) eine Quetschverbindung bewirken.

3. Elektrische Heizvorrichtung mit einem offenen Gehäuse, in dem wenigstens ein Blechbänder (16) mit einem dazwischen angeordneten PTC-Element (14) umfassendes PTC-Heizelement (12) und wenigstens ein daran wärmeleitend anliegendes Radiatorelement (10) gehalten ist, wobei das Gehäuse zum elektrischen Anschluss des wenigstens einen PTC-Heizelementes (12) eine Kontaktzunge (26) trägt, die mit einem ausgewählten Blechband (16) verbunden ist,
**dadurch gekennzeichnet,**
**dass** die Kontaktzunge (26) über eine Quetschverbindung mit dem ausgewählten Blechband (16) verbunden ist, die in einer Gehäuseöffnung (68) freiliegt.

4. Elektrische Heizvorrichtung nach Anspruch 3, **dadurch gekennzeichnet, dass** die Kontaktzunge (26) wenigstens eine einteilig daran ausgebildete Quetschlasche (44; 62) umfasst, die nach Herstellen der Quetschverbindung das Blechband (16) umgreift.

5. Elektrische Heizvorrichtung Anspruch 3 oder 4, **dadurch gekennzeichnet, dass** die Quetschlasche (44; 62) wenigstens eine Verformungskerbe (72) aufweist, durch welche die Quetschlasche (44; 62) bis in das darunterliegende Blechband (16) plastisch verformt ist.

6. Elektrische Heizvorrichtung nach Anspruch 5, **dadurch gekennzeichnet, dass** durch die Verformungskerbe (72) das Blechband (16) in einem Kantenbereich desselben kontaktiert.

7. Elektrische Heizvorrichtung nach einem der Ansprüche 3 bis 6, **dadurch gekennzeichnet, dass** Quetschlaschen (44; 62) an voneinander beabstandeten Blechbändern (16) vorgesehen sind, die elektrisch mit einer unterschiedliche Blechbänder (16) kurzschließende Kontaktbrücke (34) verbunden sind.

8. Elektrische Heizvorrichtung nach Anspruch 7, **dadurch gekennzeichnet, dass** eine der mit der Kontaktbrücke verbundenen Quetschlaschen (44; 62) von einer Kontaktzunge überragt ist.

9. Elektrische Heizvorrichtung nach einem der vorherigen Ansprüche, **dadurch gekennzeichnet, dass** zwischen dem Blechband (16) und der Quetschlasche (44; 62) wenigstens ein durch Stanzbearbeitung ausgebildeter Kontaktvorsprung (56) ausgebildet ist.
